# EUROPEAN PATENT APPLICATION

(11) **EP 0 913 457 A2**
(43) Date of publication of application: **06.05.1999**
(21) Application number: 98308866.7
(22) Date of filing: 29.10.1998
(51) Int. Cl.: C10M 171/00, C10M 169/04, C09K 5/04

(54) **Low viscosity energy efficient polyol-ester containing refrigerant**

(30) Priority: 30.10.1997 US 961305
(71) Applicant: The Lubrizol Corporation, Wickliffe, Ohio 44092 (US)
(72) Inventor: Dick, Diane L., Shaker Heights, Ohio 44122 (US); Malone, Gilbert Raymond, Perry, Ohio 44081 (US); Vinci, James N., Mayfield Heights, Ohio 44124 (US)
(74) Representative: Crisp, David Norman

(57) **Abstract**

A liquid refrigeration composition is disclosed which comprises
(A) at least one-fluorine containing hydrocarbon containing 1 or 2 carbon atoms, further wherein fluorine is the only halogen in said fluorine-containing hydrocarbon; and an effective amount of at least one miscible organic lubricant comprising
(B) at least one ester of a carboxylic acid and a polyhydroxy compound characterized by the general formula

   R[OC(O)R1]n (I)

   wherein R is a hydrocarbyl group; each R¹ is independently (a) hydrogen, (b) a straight chain hydrocarbyl group having from 1 to about 7 carbon atoms, (c) branched chain hydrocarbyl group having from 4 to about 20 carbon atoms, or (d) a straight chain hydrocarbyl group having from 8 to about 14 carbon atoms, provided that when at least one R¹ is (d), at least one other R¹ is either (a) or (b); n is at least 2; and
(C) a performance additive comprising
   (1) an alkoxylated alcohol or phenol of the formula 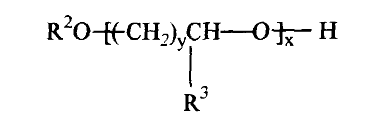 or
   (2) an alkoxylated glycol of the formula 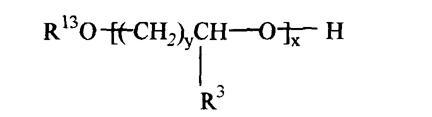 wherein R² is an aliphatic group containing from 1 to 20 carbon atoms or an aromatic or aliphatic substituted aromatic group containing from 6 to 24 carbon atoms, R³ is hydrogen, methyl or ethyl, R¹³ is a hydroxy alkyl group wherein the alkyl group contains from 2 to 8 carbon atoms, y is an integer of from 1 to 3 and x is an integer of from 2 to 50.

## Description

The present invention relates to the inclusion of a performance additive in polyol ester (POE) lubricant and refrigerant compositions wherein the refrigerant is at least one fluorine-containing hydrocarbon. The performance additive delivers phosphorus-based anti-wear agents and/or phosphorus-free friction modifier anti-wear to polyol esters of varying chemical composition which span the viscosity range of ISO 7.0-32 cSt. An alkoxylated alcohol phenol or glycol have been found to provide anti-wear benefits in POE's. These POE lubricant/refrigerant lubricant compositions have demonstrated excellent lubricant and refrigerant compatibilities and have exhibited good anti-wear performance in a variety of compressor models.

### BACKGROUND OF THE INVENTION

Compressor manufacturers have expressed a desire for low-viscosity POE's in order to improve energy efficiency. At the same time, extensive compressor testing has revealed that low viscosity lubricants devoid of additives do not yield the desired anti-wear performance. In order to address this gap in compressor lubrication technology, the inventors have formulated low viscosity esters (7.0-68 cSt.) which perform well with respect to wear without causing incompatibilities elsewhere in the refrigeration system.

Chlorofluorocarbon compounds, generally referred to in the industry as CFCs are comprised entirely of carbon, chlorine and fluorine, but no presence of hydrogen atoms. Molecules that also contain hydrogen are designated as HCFCs. Molecules containing only carbon, hydrogen and fluorine, but no presence of chlorine are designated as HFCs.

Chlorofluorocarbons have been widely used as propellants in aerosols, although use in aerosols has been diminishing in recent years because of demands of environmentalists for the reduction if not a complete ban on the use of CFCs because of the detrimental effect of CFCs on the stratosphere's ozone layer. CFCs also have been used because of their unique combination of properties as refrigerants, foam-blowing agents, and specialty solvents within the electronics and aerospace industries. Examples of CFCs which have been utilized for these purposes include CFC-11 which is trichlorofluoromethane, CFC-12 which is dichlorodifluoromethane, and CFC-113 which is 1,2,2-trifluoro-1,1,2-trichloroethane.

Depending upon the elements present in a refrigerant molecule, the various prefixes may be CFC, HCFC or HFC, as in CFC-11. The prefix may also be R, for refrigerant, as in R-11. The CFC, HCFC or HFC prefixes are interchangeable with R and one skilled in the art understands that HCFC-22 and R-22 are equivalent, CFC-12 and R-12 are equivalent and HFC-134a and R-134a are equivalent

Since 1976, when the aerosol industry began to feel the pressure to reduce if not eliminate the use of CFCs, the aerosol industry has progressively moved toward the substitution of hydrocarbon propellants for CFC propellants. The hydrocarbons, such as butane, are readily available and inexpensive, and the quality of the final product generally has been unaffected by the substitution of propellants. However, the problem of finding a safe replacement of CFC refrigerants and foam-blowing agents has been more difficult to solve. Several replacement candidates have been suggested as alternatives to the fully halogenated hydrocarbons, and these include halogenated hydrocarbons containing at least some hydrogen atoms such as HCFC-22 which is difluorochloromethane, HCFC-123 which is 1,1-dichloro-2,2,2-trifluoroethane, HFC-134a which is 1,1,1,2-tetrafluoroethane, HCFC-141b which is 1,1-dichloro-1-fluoroethane, HFC-404a which is a blend of R-125, R-143a and R-134a (pentafluoroethane, 1,1,1-trifluoroethane and 1,1,1,2-tetrafluoroethane, respectively), HFC-407c which is a blend of R-32, R-125, and R-134a (difluoromethane, pentafluoroethane and 1,1,1,2-tetrafluoroethane, respectively), and HFC-410a which is a blend of R-32 and R-125 (difluoromethane and pentafluoroethane respectively).

The ozone depletion potential of these proposed substituents is significantly less than the ozone depletion potential of the previously used CFCs. The ozone depletion potential is a relative measure of the capability of the material to destroy the ozone layer in the atmosphere. It is a combination of the percentage by weight of chlorine (the atom that attacks the ozone molecule) and the lifetime in the atmosphere. HFC-404a, HFC-407c, HFC-410a and HFC-134a generally are recommended as being candidates in refrigerant applications, and HFC-134a is particularly attractive because its ozone depletion potential has been reported as being zero.

In order for any of the refrigerants to be useful, they must be compatible with the lubricant utilized in the compressor. The presently used refrigerants such as CFC-12 are readily compatible with mineral lubricating oils which are utilized as the lubricant in air-conditioner compressors. The above-described refrigerant candidates, however, have different solubility characteristics than the refrigerants presently in use. For example, mineral lubricating oil is not compatible (i.e., insoluble) with HFC-134a. Such incompatibility results in unacceptable compressor life in compression-type refrigeration equipment including refrigerators and air-conditioners including auto, home and industrial air-conditioners. The problem is particularly evident in automotive air-conditioning systems since the compressors are not separately lubricated, and a mixture of refrigerant and and a small quantity of lubricant circulates throughout the entire system.

In order to perform as a satisfactory refrigeration fluid, the mixture of refrigerant and lubricant must be compatible and stable over the operating temperature range of the refrigeration system such as from about 0°C and about above 80°C. It is generally desirable for the lubricants to be soluble in the refrigerant at concentrations of about 5 to 20% over a temperature range of from about -40°C to about 80°C. These temperatures generally correspond to the working temperatures of a refrigeration compressor system. In addition to thermal stability, the refrigeration liquids must have acceptable viscosity characteristics which are retained even at high temperatures, and the refrigeration liquid should not have a detrimental effect on materials used in the compressors.

U.S. Patent No. 4,851,144 (McGraw et al., July 25, 1989) relates to lubricant base compositions for compression refrigeration that are composed of 95 to 5% by weight of polyether polyols having a number average molecular weight from about 400 to about 5,000 and 5 to 95% of esters made from polyhydric alcohols with alkanoic acids or esters made from alkanedioic acids with alkanols. A refrigeration fluid is made from the base composition with the addition of selected hydrochloro-fluorocarbons and hydrofluorocarbons so that the base composition is miscible with the refrigerant in the range from -20°C to greater than 65°C.

U.S. Patent No. 5,185,092 (Fukuda et al., February 9, 1993) describes a lubricating oil for refrigerators using 1,1,1,2-tetrafluoroethane refrigerant. Having esters as base oil, its viscosity range is between 2-30 mm/s at 100°C. By adding esters alone or by adding esters having different viscosity to esters base oil, or by adding polymer, the viscosity is adjusted to obtain the lubricating oil suitable for various types of refrigerators. The lubricating oil thus obtained has excellent compatibility with 1,1,1,2-tetrafluoroethane refrigerant, which is an alternative to freon, and has low hygroscopic property and high heat-resistant property.

By reducing the total acid number to 0.05 mg KOH/g or less, the corrosion-resistant property and insulating property of lubricating oil are not decreased, and the lubricating oil for refrigerator having high refrigerant stability, hydrolytic stability and insulating property can be obtained.

Further, by adding sulfur type anti-wear agent, the better anti-wear effect of the lubricating oil can be obtained on iron/aluminum contact portion in the refrigerator.

U.S. Patent No. 5,211,884 (Bunemann et al., May 18, 1993) describes a lubricant/working fluid composition for use in mechanical vapor compression type heat transfer devices wherein the working fluid is preferably tetrafluoroethane and the lubricant is an ester which is miscible with the working fluid at 10% over a temperature range of -50°C to +80°C, and has a viscosity of 5 to 100 cSt at 40°C. Useful esters include pentaerythritol partial ester of straight chain C₅ or branched chain C₇ carboxylic acids. The esters are compatible with non-chlorine containing working fluids and exhibit a low level of corrosion.

U.S. Patent No. 5,254,280 (Thomas et al., October 19, 1993) is directed to polyoxyalkylene glycols which are used to flush currently used lubricants such as mineral oil, alkyl benzenes, and esters from a refrigeration system for conversion to fluorocarbon or hydrofluorocarbon refrigerants. The polyoxyalkylene glycol is selected from the group consisting of polyoxyalkylene glycol which is at least difunctional with respect to hydroxyl groups, polyoxyalkylene glycol having an alkyl cap on one end thereof, and polyoxyalkylene glycol having at least two alkyl caps. The polyoxyalkylene glycol has a molecular weight of about 300 to 4,000, has a viscosity of about 5 to 150 centistokes at 37°C, and is made from alkylene oxide having at least 4 carbon atoms.

U.S. Patent No. 5,369,287 (Sunaga et al., November 29, 1994) relates to 1,1,1,2-tetrafluoroethane used in a refrigerator as the refrigerant, while a polyolester oil which is well compatible with the refrigerant is used as the base oil and a phenolic antioxidant, a specified amine and a phosphoric triester are added thereto to give a refrigerator oil composition. Thus the hydrolysis of the polyolester oil can be prevented to thereby protect the sliding members such as a roller and a vane from the corrosion and wear which are caused by the hydrolysis.

U.S. Patent No. 5,395,544 (Hagihara et al., March 7, 1995) is directed to a working fluid composition for a refrigerating machine which contains difluoromethane and a refrigeration oil. An ester formed between (a) an aliphatic polyhydric alcohol having a carbon number of 2 to 12; and (b) a saturated aliphatic monocarboxylic acid having a carbon number of 4 to 9 or a derivative thereof, the ratio of the number of acyl groups having a branched chain or branched chains to the number of the entire acyl groups in the ester being not less than 95%, is used as a base oil of the refrigeration oil. The working fluid composition for refrigerating machine of the present invention is excellent not only in compatibility, lubricity, and electric insulating property but also in thermal stability as compared to the conventional products.

U.S. Patent No. 5,403,503 (Seiki et al., April 4, 1995) discloses a refrigerator oil composition for hydrogen-containing hydrofluorocarbons (hydrogenated Flon compound) refrigerant which comprises a polyoxyalkylene glycol derivative and/or a specific polyester compound, which are/is compounded with (a) an aliphatic acid partially esterified with a polyhydric alcohol and (b) a phosphate compound and/or a phosphite compound. The refrigerator oil composition according to the present invention can be utilized as a refrigerator oil effective for improving wear resistance, especially that between aluminum material and steel material owing to the excellent miscibility with hydrogenated Flon refrigerant such as Flon 134a as well as prominent lubricant performance.

U.S. Patent No. 5,431,835 (Katafuchi et al., July 11, 1995) relates to a lubricant for refrigerating machines employing tetrafluoroethane or the like as a refrigerant which comprises as an essential component a base oil comprising (A) 40 to 95% by weight of a synthetic oil composed of a poly-α-olefin and/or an ethylene/ α-olefin copolymer or a mixture of an alkyl-benzene and a poly-α-olefin and/or an ethylene/α-olefin copolymer and (B) 5 to 60% by weight of a fluidity improver composed of a polyoxyalkylene glycol compound, etc. The lubricant is used along with a refrigerant comprising a substituted flon compound such as 1,1,1,2-tetrafluoroethane (R-134a), and is excellent in the performance such as wear resistance, electrical insulating properties, hydrolytic stability, nonhydrogroscopicity, etc. and also in returnability of the lubricant. Thus, the lubricant is especially effective when used in automobile or household air conditioners, refrigerators, etc. having high industrial usefulness.

U.S. Patent No. 5,554,311 (Katafuchi et al., September 10, 1996) discloses a lubricant composition for compression-type refrigerating machines containing tetrafluoroethane or the like as a refrigerant and a lubricant comprising (A) 40 to 95% by weight of a synthetic oil composed of a poly-α-olefin and/or an ethylene/α-olefin copolymer or a mixture of an alkylbenzene and a poly-α-olefin and/or an ethylene/α-olefin copolymer and (B) 5 to 60% by weight of a fluidity improver composed of both or either of an ester compound and a triglyceride. The lubricant composition is excellent in the performance such as wear resistance, electrical insulating properties, hydrolytic stability, nonhygroscopicity, etc. and also in returnability of the lubricant composition. Thus, the lubricant is especially effective when used in automobile or household air condition, refrigerator, etc. having high industrial usefulness.

European Patent No. 377,122 (Kawaguchi et al.,) publication date 11.07.90) relates to a novel lubricating oil for refrigerators with compressor. More particularly, the reference relates to a lubricating oil for refrigerators with a compressor (compression-type refrigerators), comprising as the main component a polyoxyalkyleneglycol derivative having a high lubricating property as well as a favorable compatibility with hydrogen-containing flon compounds such as 1,1,1,2-tetrafluoroethane which can substitute for flon compounds such as dichlorodifluoromethane used as refrigerant and involved in environmental pollution problems.

### SUMMARY OF THE INVENTION

A liquid refrigeration composition is disclosed which comprises
(A) at least one-fluorine containing hydrocarbon containing 1 or 2 carbon atoms, further wherein fluorine is the only halogen in said fluorine-containing hydrocarbon; and an effective amount of at least one miscible organic lubricant comprising
(B) at least one ester of a carboxylic acid and a polyhydroxy compound characterized by the general formula

   R[OC(O)R¹]ₙ (I)

   wherein R is a hydrocarbyl group; each R¹ is independently (a) hydrogen, (b) a straight chain hydrocarbyl group having from 1 to about 7 carbon atoms, (c) branched chain hydrocarbyl group having from 4 to about 20 carbon atoms, or (d) a straight chain hydrocarbyl group having from 8 to about 14 carbon atoms, provided that when at least one R¹ is (d), at least one other R¹ is either (a) or (b); n is at least 2; and
(C) a performance additive comprising
   (1) an alkoxylated alcohol or phenol of the formula 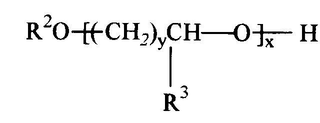 or
   (2) an alkoxylated glycol of the formula 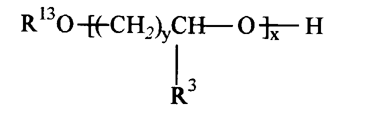 wherein R² is an aliphatic group containing from 1 to 20 carbon atoms or an aromatic or aliphatic substituted aromatic group containing from 6 to 24 carbon atoms, R³ is hydrogen, methyl or ethyl, R¹³ is a hydroxy alkyl group wherein the alkyl group contains from 2 to 8 carbon atoms, y is an integer of from 1 to 3 and x is an integer of from 2 to 50.

### BRIEF DESCRIPTION OF THE DRAWING

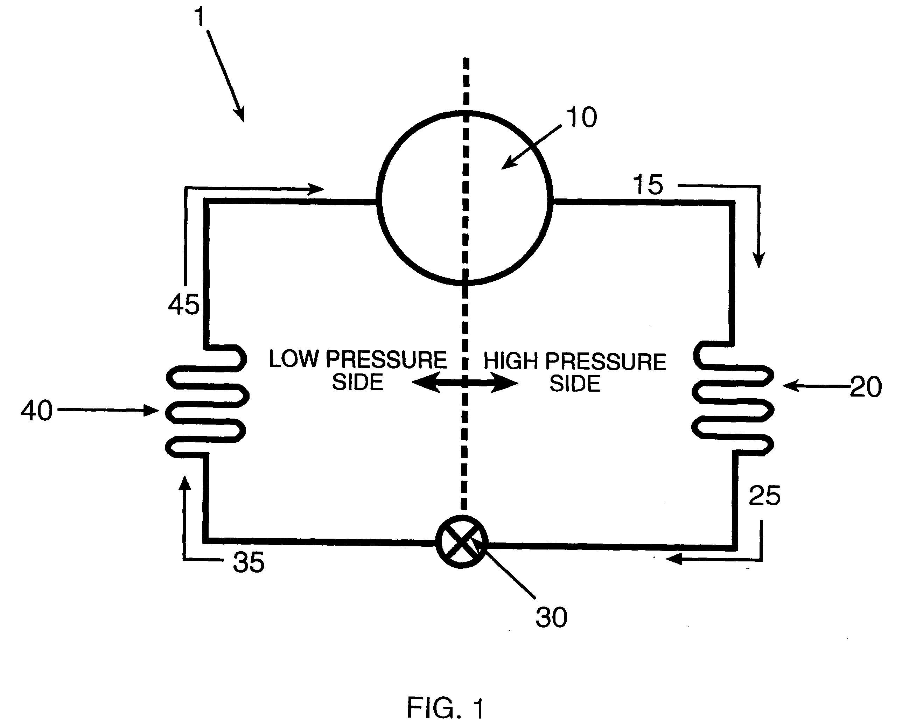

FIG. 1 is a schematic diagram of the basic mechanical compression refrigeration cycle. Various preferred features and embodiments of the invention are described below by way of non-limiting illustration.

### DETAILED DESCRIPTION OF THE INVENTION

### Compressors and the Refrigeration Cycle

Compressors are machines that draw in a gas and deliver the gas at a higher pressure and temperature than at intake. The higher pressure of the gas is generally used to do useful work. Compressors are normally driven by an electric motor, steam turbine or internal combustion engine and come in a variety oftypes and sizes, depending on the application need. Refrigeration and air conditioning can be considered as compressor applications which require special consideration, because some lubricant circulates with the refrigerant in such systems. Therefore, the refrigerant and lubricant must be compatible.

Refrigeration compressors are classified as either positive displacement or dynamic compressors. Positive displacement compressors increase the pressure of a refrigerant gas by decreasing the volume of the gas. Examples include reciprocation (single and double acting), sliding vane rotary screw and scroll compressors.

Dynamic compressors such as multistage centrifugal compressors are used in large air conditioning facilities. In these compressors, the refrigerant is channeled through the machine which is designed to impart velocity to the refrigerant and then convert the velocity (kinetic energy) into pressure by moving the gas through diffusers.

Both positive displacement and dynamic compressors are often found in hermetic or semi-hermetic type designs. All of the moving parts, including the electric motor, are sealed inside these type of refrigeration systems. This design is almost always found in the refrigeration system of refrigerator/freezers and centrifugal chillers. Thus, lubricants for this type of service should be compatible with the system elastomers and other varnish materials found in electric motors. They also should have a high dielectric strength (25 kilovolts minimum).

Compression refrigeration systems are widely used in both domestic and industrial applications. The primary components of this cycle are shown in FIG **1**.

There are four essential parts to every compression refrigeration system **1**; the compressor **10**, the condenser **20**, the expansion valve (in some cases, the capillary tube) **30** and the evaporator **40**. Larger industrial units also contain refrigerant receivers to collect liquid refrigerant under pressure prior to the expansion valve.

Referring to the refrigeration cycle in FIG **1**, the compressor **10** compresses the incoming low-pressure refrigerant gas **45** from the evaporator **40** and discharges the refrigerant gas at a higher pressure and temperature **15**. The discharged gas **15** from the compressor **10** passes through the condenser (or cooling coils) **20.** Here the latent heat of vaporization is removed from the refrigerant gas **15**, condensing it into a high pressure liquid. **25** The liquid refrigerant **25** passes through the expansion valve **30**, which reduces the pressure on the liquid **35** and therefore its boiling point. As the low pressure liquid **35** passes through the evaporator, or cooling unit **40**, it absorbs heat from the surroundings and vaporizes, producing a cooling effect. The low-pressure gas **45** flows from the evaporator **40** and is ready for another cycle to begin.

Two things are interesting to note about the refrigeration cycle. First, since the lubricant travels with the refrigerant, the low temperature and miscibility properties of the lubricant are critical to the performance of the refrigeration system. Second, the heat removed from the refrigerant in the condenser is equal to the amount of heat removed from the evaporator plus the heat resulting from the mechanical work done by the compressor. (Therefore, on a hot summer day, if one opens the refrigerator door to cool off the room, the net result will be a warming of the room!)

### Nomenclature

Chlorofluorocarbon compounds (CFCs) are comprised entirely of carbon, chlorine and fluorine atoms. Molecules that also contain hydrogen are designated as HCFCs. Molecules containing only carbon, hydrogen and fluorine (no chlorine) are designated as HFCs. However, these distinctions are not always observed in the technical literature and "CFC" is sometimes used in reference to all three molecular types.

In general, refrigerants are designated with an "R" (Refrigerant) prefix and a two or three digit number. Single component refrigerants are denoted as R-XYZ wherein X represents the number of carbon atoms less 1, Y represents the number of hydrogen atoms plus 1 and Z represents the number of fluorine atoms. In the case of single carbon molecules, the first digit disappears and the refrigerant only has a two digit designation. If the molecule has no hydrogen atoms, the value of Y is 1. All other atoms are assumed to be chlorine. A lower case letter is sometimes added as a suffix to distinguish among possible isomers in two-carbon molecules.

The refrigerant chlorodifluoromethane 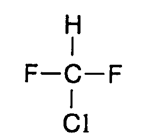 has one carbon atom (X = 1-1=0), one hydrogen atom (Y=1+1=2) and 2 fluorine atoms (Z=2) such that R-XYZ is R-22.

The refrigerant 1,1,1,2-tetrafluoroethane 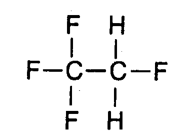 has two carbon atoms (X=2 - 1=1), two hydrogen atoms (Y=2 + 1=3) and 4 fluorine atoms (Z=4) such that R-XYZ is R-134a. This particular refrigerant compound receives an "a" suffix to designate that the structure is "asymmetric," meaning not symmetrical, with both hydrogen atoms attached to the same carbon atom. Its isomer is 1,1,2,2-tetrafluoroethane 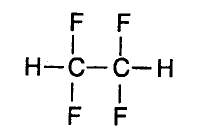 which is symmetrical and this refrigerant is designated R-134.

The same nomenclature procedure is used in beginning with a refrigerant designation, i.e., R-123. Letting the X=1, Y=2 and Z=3, these values generate a structure having 2 carbon atoms (X=2-1=1), 1 hydrogen atom (Y=1+1=2) and 3 fluorine atoms (Z=3). All other atoms are assumed to be chlorine. Thus R-123 is an isomer of dichlorotrifluoroethane and specifically is 1,1-dichloro-2,2,2-trifluoroethane.

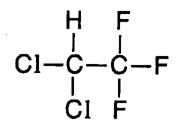

In the case of molecules that can have more than one asymmetric configuration, the nomenclature is more complex in terms of assigning suffix letter designations.

Other chemical types of refrigerants are designated as follows:

| | |
|---|---|
| C300 series | Cyclic Organic |
| 400 series | Zeotropes |
| 500 series | Azeotropes |
| 600 series | Miscellaneous Organic |
| 700 series | Inorganic |
| 1000 series | Unsaturated Organic |

Throughout this specification and claims, all parts and percentages are by weight, temperatures are in degrees Celsius, and pressures are at or near atmospheric pressure unless otherwise clearly indicated.

As used in this specification and in the appended claims, the terms "hydrocarbyl" and "hydrocarbylene" denote a group having a carbon atom directly attached to the polar group and having a hydrocarbon or predominantly hydrocarbon character within the context of this invention. Such groups include the following:
(1) Hydrocarbon groups; that is, aliphatic, (e.g., alkyl or alkenyl), alicyclic (e.g., cycloalkyl or cycloalkenyl), and the like, as well as cyclic groups wherein the ring is completed through another portion of the molecule (that is, any two indicated substituents may together form a ring). Such groups are known to those skilled in the art. Examples include methyl, ethyl, octyl, decyl, octadecyl, cyclohexyl, etc.
(2) Substituted hydrocarbon groups; that is, groups containing non-hydrocarbon substituents which, in the context of this invention, do not alter the predominantly hydrocarbon character of the group. Those skilled in the art will be aware of suitable substituents. Examples include halo, hydroxy, alkoxy, etc.
(3) hetero groups; that is, groups which, while predominantly hydrocarbon in character within the context of this invention, contain atoms other than carbon in a chain or ring otherwise composed of carbon atoms. Suitable hetero atoms will be apparent to those skilled in the art and include, for example, nitrogen, oxygen and sulfur.

In general, no more than about three substituents or hetero atoms, and preferably no more than one, will be present for each 10 carbon atoms in the hydrocarbyl group.

Terms such as "alkyl", "alkylene", etc. have meanings analogous to the above with respect to hydrocarbyl and hydrocarbylene.

The term "hydrocarbon-based" also has the same meaning and can be used interchangeably with the term hydrocarbyl when referring to molecular groups having a carbon atom attached directly to the polar group.

The term "lower" as used herein in conjunction with terms such as hydrocarbyl, hydrocarbylene, alkylene, alkyl, alkenyl, alkoxy, and the like, is intended to describe such groups which contain a total of up to 7 carbon atoms.

When a compound or component is indicated herein as being "soluble", the compound or component is soluble in the liquid compositions of the invention comprising the fluorine-containing hydrocarbon and the lubricant. For example, a compound or component is considered "soluble" so long as it is soluble in the liquid compositions, even though it may be insoluble in the fluorine-containing hydrocarbon per se.

### (A) Fluorine-Containing Hydrocarbon

The liquid compositions of the present invention comprise at least one fluorine-containing hydrocarbon. That is, the fluorine-containing hydrocarbons contain at least one C-H bond as well as C-F bonds. Because the liquid compositions of the present invention are primarily intended for use as refrigerants, the fluorine-containing hydrocarbon preferably contains one or two carbon atoms, and more preferably two carbon atoms.

These compounds containing only carbon, hydrogen and fluorine are referred to herein as fluorohydrocarbons. Hydrocarbons containing chlorine as well as fluorine and hydrogen are referred to as chlorofluoro-hydrocarbons. The fluorine-containing hydrocarbons useful in the composition of the present invention are to be distinguished from the fully halogenated hydrocarbons which have been and are being used as propellants, refrigerants and blowing agents such as CFC-11, CFC-12 and CFC-113 which have been described in the background.

Ozone depletion potential of fluorine-containing hydrocarbons that are utilized in this invention are all zero. Specific examples of useful fluorine-containing hydrocarbons are the previously mentioned R-134a, R-404a, R-407c and R-410a. Other fluorine-containing hydrocarbons that are useful are R-23 (trifluoromethane), R-143a (1,1,1-trifluoroethane), R-152a (1,1-difluoroethane), and R-134 (1,1,2,2-tetrafluoroethane).

In general, fluorine-containing hydrocarbons which are useful as refrigerants are fluoromethanes and fluoroethanes boiling at a relatively low temperature at atmospheric pressure, e.g., below 30°C. Mixtures of fluorine-containing hydrocarbons may be used, and the amount of each fluorohydrocarbon in the mixture may be varied as desired. The useful fluorocarbon refrigerants serve to transfer heat in a refrigeration system by evaporating and absorbing heat at a low temperature and pressure, e.g., at ambient temperature and atmospheric pressure, and by releasing heat on condensing at a higher temperature and pressure.

The miscible organic lubricant is an effective amount of a combination of (B) at least one ester of a carboxylic acid and a polyhydroxy compound and (C) a performance additive. The term "effective amount" refers to a sufficient quantity of the miscible organic lubricant to impart the desired lubrication properties to the liquid refrigeration composition. The fluorine containing hydrocarbon (A) is present either as a major amount or a minor amount in the miscible organic lubricant which is an effective amount of a combination of Component (B) and Component (C). Automotive air conditioning is an important, but not exclusive, focus of this invention. It is well known to one skilled in the art that, for use in automobile air conditioning systems, a major amount of the fluorine containing hydrocarbon (A) and a minor amount of the miscible organic lubricant, (B) and (C), is a system requirement. In general, these systems use from two to three pounds of (A) and from 5 to 12 ounces of miscible organic lubricant.

One skilled in the art also understands that the ratios of (A) to miscible organic lubricant vary widely with applications and sometimes can be reversed, with the amount of miscible organic lubricant being greater than the amount of (A). This is especially true in small household appliances such as small refrigerators and window air conditioners. In these systems, the overall system volume is small, and thus the requirement for (A) is also small, on the order of 5 to 8 ounces while utilizing in excess of 10 ounces of miscible organic lubricant.

### (B) Ester of a Carboxylic Acid and a Polyhydroxy Compound

The liquid refrigerant compositions of the present invention contain at least one carboxylic ester of a polyhydroxy compound containing at least two hydroxy groups and characterized by the general formula

R[OC(O)R¹]ₙ (I)

wherein R is a hydrocarbyl group, each R¹ is independently hydrogen, a straight chain lower hydrocarbyl group, a branched chain hydrocarbyl group, or a straight chain hydrocarbyl group containing from about 8 to about 22 carbon atoms provided that at least one R¹ group is hydrogen, a lower straight chain hydrocarbyl or a branched chain hydrocarbyl group, or a carboxylic acid- or carboxylic ester-containing hydrocarbyl group, and n is at least 2.

The carboxylic esters utilized as Component (B) in the liquid refrigerant compositions of the present invention are reaction products of one or more carboxylic acids (or the lower esters thereof such as methyl, ethyl, etc.) with polyhydroxy compounds containing at least two hydroxy groups. The polyhydroxy compounds may be represented by the general formula

R(OH)ₙ (II)

wherein R is a hydrocarbyl group and n is at least 2. The hydrocarbyl group may contain from 4 to about 20 or more carbon atoms, and the hydrocarbyl group may also contain one or more nitrogen and/or oxygen atoms. The polyhydroxy compounds generally will contain from about 2 to about 10 hydroxy groups and more preferably from about 2 to about 6 hydroxyl groups. The polyhydroxy compound may contain one or more oxyalkylene groups and, thus, the polyhydroxy compounds include compounds such as polyetherpolyols. The number of carbon atoms and number of hydroxy groups contained in the polyhydroxy compound used to form the carboxylic esters may vary over a wide range, and it is only necessary the carboxylic ester produced with the polyhydroxy compounds be soluble in the fluorine-containing hydrocarbon (A).

The polyhydroxy compounds used in the preparation of the carboxylic esters (I) also may contain one or more nitrogen atoms. For example, the polyhydroxy compound may be an alkanol amine containing from 3 to 6 hydroxy groups. In one preferred embodiment, the polyhydroxy compound is an alkanol amine containing at least two hydroxy groups and more preferably at least three hydroxy groups.

Specific examples of polyhydroxy compounds useful in the present invention include ethylene glycol, diethylene glycol, triethylene glycol, propylene glycol, dipropylene glycol, glycerol, neopentyl glycol, 1,2-, 1,3- and 1,4-butanediols, pentaerythritol, dipentaerythritol, tripentaerythritol, triglycerol, trimethylolpropane, sorbitol, hexaglycerol, 2,2,4-trimethyl-1,3-pentanediol, etc. Mixtures of any of the above polyhydroxy compounds can be utilized.

The carboxylic acids utilized in the preparation of the carboxylic esters useful in the liquid refrigerant compositions of the present invention may be characterized by the following general formula

R¹COOH (III)

wherein R¹ is (a) hydrogen, (b) a straight chain lower hydrocarbyl group, (c) a branched chain hydrocarbyl group, or (d) a mixture of one or both of (b) and (c) with a straight chain hydrocarbyl group containing from about 8 to about 14 carbon atoms. Stated otherwise, at least one R¹ group in the ester of Formula I must contain a lower straight chain hydrocarbyl group or a branched chain hydrocarbyl group. The straight chain lower hydrocarbyl group (R¹) contains from 1 to about 7 carbon atoms, and in a preferred embodiment, contains from 1 to about 5 carbon atoms. The branched chain hydrocarbyl group may contain any number of carbon atoms and will generally contain from 4 to about 20 carbon atoms. In one preferred embodiment, the branched chain hydrocarbon group contains from 5 to 20 carbon atoms and in a more preferred embodiment, contains from about 5 to about 14 carbon atoms.

In one preferred embodiment, the branched chain hydrocarbyl groups are characterized by the structures

-C(R¹⁰)(R¹¹)(R¹²)

wherein R¹⁰, R¹¹ and R¹² are each independently alkyl groups, and at least one of the alkyl groups contains two or more carbon atoms. Such branched chain alkyl groups, when attached to a carboxyl group are referred to in the industry as neo groups and the acids are referred to as a neo acid. In one embodiment, R¹⁰ and R¹¹ are methyl groups and R¹² is an alkyl group containing two or more carbon atoms.

Any of the above hydrocarbyl groups (R¹) may contain one or more carboxy groups or carboxy ester groups such as -COOR¹⁴ wherein R¹⁴ is a lower alkyl, hydroxy alkyl or a hydroxyalkyloxy alkyl group. Such substituted hydrocarbyl groups are present, for example, when the carboxylic acid R¹COOH (III) is a dicarboxylic acid or a monoester of a dicarboxylic acid. Generally, however, the acid R¹COOH (III) is a monocarboxylic acid since polycarboxylic acids tend to form polymeric products if the reaction conditions and amounts of reactants are not carefully regulated. Mixtures of monocarboxylic acids and minor amounts of dicarboxylic acids or anhydrides are useful in preparing the esters (I).

Examples of carboxylic acids containing a straight chain lower hydrocarbyl group include formic acid, acetic acid, propionic acid, butyric acid, pentanoic acid, hexanoic acid and heptanoic acid. Examples of carboxylic acids wherein the hydrocarbyl group is a branched chain hydrocarbyl group include 2-ethyl-n-butyric acid, 2-hexyldecanoic acid, isostearic acid, 2-methyl-hexanoic acid, 3,5,5-trimethylhexanoic acid, 2-ethylhexanoic acid, neoheptanoic acid, neodecanoic acid, and commercial mixtures of branched chain carboxylic acids such as the mixture identified as Neo 1214 acid from Exxon.

The third type of carboxylic acids which can be utilized in the preparation of the carboxylic esters are the acids containing a straight chain hydrocarbyl group containing from 8 to about 14 carbon atoms. As noted previously, these higher molecular weight straight chain acids can be utilized only in combination with one of the other acids described above since the higher molecular weight straight chain acids are not soluble in the fluorohydrocarbons. Examples of such higher molecular weight straight chain acids include decanoic acid, dodecanoic acid, lauric acid, stearic acid, myristic acid, behenic acid, etc. Examples of dicarboxylic acids include maleic acid, succinic acid, adipic acid, suberic acid, azelaic acid, sebacic acid, etc.

In another embodiment, the carboxylic acids utilized to prepare the esters may comprise a mixture of a major amount of monocarboxylic acids and a minor amount of dicarboxylic acids. The presence of the dicarboxylic acids results in the formation of esters of higher viscosity. The use of mixtures containing larger amounts of dicarboxylic acids should be avoided since the product ester will contain larger amounts of polymeric esters, and such mixtures may be insoluble in the fluorohydrocarbons. An example of such a mixture is 80 parts of neoheptanoic acid and 20 parts of succinic acid.

The carboxylic esters of Formula I are prepared, as mentioned above, by reacting at least one carboxylic acid with at least one polyhydroxy compound containing at least two hydroxy groups. The formation of esters by the interaction of carboxylic acids and alcohols is acid-catalyzed and is a reversible process which can be made to proceed to completion by use of a large amount of acid or by removal of the water as it is formed in the reaction. If the ester is formed by transesterification of a lower molecular weight carboxylic ester, the reaction can be forced to completion by removal of the lower molecular weight alcohol formed as a result of a transesterification reaction. The esterification reaction can be catalyzed by either organic acids or inorganic acids. Examples of inorganic acids include sulfuric acids, phosphoric acids and acidified clays. A variety of organic acids can be utilized including para-toluenesulfonic acid, acidic resins such as Amberlyst 15, etc. Organometallic catalysts include, for example, tetraisopropoxy orthotitanate. However, it is preferred that the esterification reaction is conducted in the absence of catalyst.

The amounts of carboxylic acids and polyhydroxy compounds included in the reaction mixture may be varied depending on the results desired. If it is desired to esterify all of the hydroxy groups containing in the polyhydroxy compounds, sufficient carboxylic acid should be included in the mixture to react with all of the hydroxyl groups. When mixtures of the acids are reacted with a polyhydroxy compound in accordance with the present invention, the carboxylic acids can be reacted sequentially with the polyhydroxy compounds or a mixture of carboxylic acids can be prepared and the mixture reacted with the polyhydroxy compounds. In one preferred embodiment wherein mixtures of acids are utilized, the polyhydroxy compound is first reacted with one carboxylic acid, generally, the higher molecular weight branched chain or straight chain carboxylic acid followed by reaction with the straight chain lower hydrocarbyl carboxylic acid. Throughout the specification and claims, it should be understood that the esters also can be formed by reaction of the polyhydroxy compound with the anhydrides of any of the above-described carboxylic acids. For example, esters are easily prepared by reacting the polyhydroxy compounds either with acetic acid or acetic anhydride.

The formation of esters by the reaction of carboxylic acids or anhydrides with the polyhydroxy compounds described above can be effected by heating the acids or anhydrides, the polyhydroxy compounds, and an acid catalyst to an elevated temperature while removing water or low molecular weight alcohols formed in the reaction. Generally, temperatures of from about 75°C to about 200°C or higher are sufficient for the reaction. The reaction is completed when water or low molecular weight alcohol is no longer formed, and such completion is indicated when water or low molecular weight esters can no longer be removed by distillation.

In some instances, it is desired to prepare carboxylic esters wherein not all of the hydroxyl groups have been esterified. Such partial esters can be prepared by the techniques described above and by utilizing amounts of the acid or acids which are insufficient to esterify all of the hydroxyl groups.

The following examples illustrate the preparation of various carboxylic esters which are useful as (B) in the liquid refrigerant compositions of the invention.

### Example B1

Added to a flask equipped with a stirrer, thermowell, and distillation condenser are 635 parts (2.5 moles) dipentaerythritol, 1418 parts (13.9 moles) n-valeric acid, 79 parts (0.6 moles) n-heptanoic acid and 79 parts (0.5 moles) n-nonanoic acid. The contents are heated to 160 °C. and held for 6 hours. The temperature is then increased to 220°C. and held for 48 hours. Water (250 ml) was removed during this time. The contents are vacuum stripped to remove any unreacted acid. The contents are then treated with 100 ml of a 5 percent by weight aqueous sodium hydroxide solution and stirred for 3 hours at 60°C. The contents are permitted to separate into phases. Any unreacted carboxylic acid is then reacted with the sodium hydroxide solution to form a sodium salt which is soluble in the aqueous phase. This aqueous phase is then removed and the sodium hydroxide procedure is repeated. Residual water is removed at 70°C. with nitrogen blowing at 3 cubic feet per hour. The contents are filtered using diatomaceous clay and alumina to give the desired product. Analyses: % water: 0.012; %OH: 0.012; total acid number: 0.00; 40°C viscosity: 50 cSt; 100°C. viscosity: 8.18 cSt; VI: 138.

Examples 2-10 relate to the preparation of esters wherein the acid or acid mixtures are either all straight chain or non-branched at the alpha position. These examples are essentially prepared as per the procedure of Example 1.

### Example B2

Reacted together to form an ester are n-hexanoic acid and neopentyl glycol in a molar ratio of 2:1 respectively. The 40°C viscosity is 5.6 cSt.

### Example B3

Reacted together to form an ester are n-octanoic acid and neopentyl glycol in a molar ratio of 2:1 respectively. The 40°C viscosity is 7.0 cSt.

### Example B4

Reacted together to form an ester are n-nonanoic acid and neopentyl glycol in a molar ratio of 2:1 respectively. The 40°C viscosity is 8.7 cSt.

### Example B5

Reacted together to form an ester are n-valeric acid and trimethylolpropane in a molar ratio of 3:1 respectively. The 40°C viscosity is 9.4 cSt.

### Example B6

Reacted together to form an ester are n-heptanoic acid and trimethylol propane in a molar ratio of 3:1 respectively. The 40°C viscosity is 13.9 cSt.

### Example B7

Reacted together to form an ester are n-valeric acid and mono-pentaerythritol in a molar ratio of 4:1 respectively. The 40°C viscosity is 15.6 cSt.

### Example B8

Reacted together to form an ester are equal molar mixtures of n-valeric acid and n-heptanoic acid with mono-pentaerythritol in a 2:2:1 molar ratio respectively. The 40°C viscosity is 18.6 cSt.

### Example B9

Reacted together to form an ester is an acid mixture of n-valeric acid, n-heptanoic acid and iso-nonanoic acid with mono-pentaerythritol in a molar ratio of 1.4:1.3:1.3:1 respectively. The 40°C viscosity is 32.3 cSt.

### Example B10

Reacted together to form an ester is an acid mixture of n-valeric acid, iso-octanoic acid and iso-nonanoic acid with mono-pentaerythritol in a molar ratio of 0.8:1.2:2:1 respectively. The 40°C viscosity is 68 cSt.

### Example B11

Added to a flask equipped as in Example 1 are 1040 parts (10 moles) neopentylglycol and 2880 parts (20 moles) 2-ethylhexanoic acid. The contents are heated to 180°C and held for 5 hours while removing water. The temperature is then increased to 200°C and held for 15 hours. Water (325 ml) is removed during this time. The temperature is then increased to 220°C and held for 2 days. At this point the neutralization number is 0.4 acid. The formed ester is transferred to a separatory funnel and extracted twice with 100 ml portions of 5 percent aqueous sodium hydroxide followed by two extractions with water. A diatomaceous earth filtering aid is added and the ester is stirred for 2 hours at room temperature. The ester is then filtered through an alumina bed. Analyses: % OH: 0.04; total acid number: 0.01; 40°C viscosity: 7.5 cSt; 100°C viscosity: 2.05 cSt; VI: 51.

Example B12 relates to the preparation of an ester wherein the acid is a branched chain acid at the alpha position. This example is essentially prepared as per Example B11.

### Example Bl2

Reacted together to form an ester are 2-ethylhexanoic acid and mono-pentaerythritol in a 4:1 molar ratio respectively. The 40°C viscosity is 46 cSt.

### (C) Performance Additive

In addition to Components (A) and (B), the composition of this invention also includes (C) a performance additive. The performance enhanced by these additives are in the areas of anti-wear, oxidation inhibition, rust/corrosion inhibition, extreme pressure, viscosity modification, lubricity and the like.

The performance additive (C) comprises
(1) an alkoxylated alcohol or phenol or
(2) an alkoxylated glycol.

The performance additive further comprises
(3) an alkyl phenol or
(4) a phosphorus compound or mixtures of (3) and (4).

### (C1) The Alkoxylated Alcohol or Phenol

Component (C1) is an alkoxylated alcohol or phenol of the formula 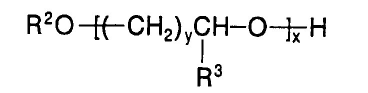 wherein R² is an aliphatic group containing from 1 to 20 carbon atoms or an aromatic or aliphatic substituted aromatic group containing from 6 to 24 carbon atoms, R³ is hydrogen, methyl or ethyl, y is an integer of from 1 to 3 and x is an integer of from 2 to 50.

Component (Cl) is formed by the reaction of an alcohol or phenol with an alkylene oxide. The aliphatic group R² for an alcohol preferably contains from 1 to 12 carbon atoms and most preferably from 1 to 6 carbon atoms. When R² is an aromatic or substituted aromatic group, it contains from 6 to 18 carbon atoms and the aromatic group is a phenyl group. The substituent is an alkyl group containing from 1 to 12 carbon atoms. A most preferred substituent is an octyl group.

The alkylene oxides that react with the alcohol or phenol comprise ethylene oxide (y = 1, R³ = hydrogen), propylene oxide (y = 1, R³ = methyl and butylene oxide (y = 1, R³ = ethyl). In order for y = 2, the alkylene oxide used is 1,3-epoxypropane (y = 2, R³ = hydrogen), 2-methyloxetane (y = 2, R³ = methyl) or 2-ethyloxetane (y = 2, R³ = ethyl) as per the following reaction: 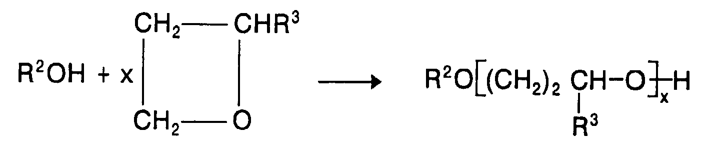 Anywhere from 2 to 50 moles of alkylene oxide per mole of alcohol or phenol is employed in the preparation of Component (Cl), preferably from 2 to 10 and most preferably from 2 to 5. Especially preferred as (C1) is Triton X-45, an octylphenoxypolyethoxyethanol available from Union Carbide wherein R² is octylphenyl, y = 1, R³ = hydrogen and x = 4.5

### (C2) The Alkoxylated Glycol

Component (C2) is an alkoxylated glycol of the formula 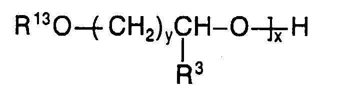 wherein R¹³ is a hydroxy alkyl group wherein the alkyl group contains from 2 to 8 carbon atoms and R³ and the subscripts x and y have the same values as taught within (C1). Component (C2) is prepared in the same manner as Component (C1) except that the alcohol or phenol is replaced with a glycol.

The performance additive (C) may further comprise (C3) an alkyl phenol or (C4) a phosphorus compound or mixtures of (C3) and (C4).

### (C3) The Alkyl Phenol

The alkyl phenol is of the formula 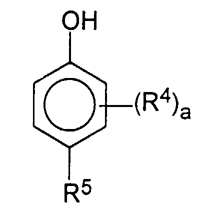 wherein R⁴ is an alkyl group containing from 1 to 24 carbon atoms, R⁵ is hydrogen, an alkyl group containing 1 or 2 carbon atoms or -OR wherein R⁶ is an alkyl group containing from 1 to 12 carbon atoms and a is an integer of from 1 to 4.

Within (C3) preferably R⁴ contains from 1 to 8 carbon atoms and most preferably from 1 to 4 carbon atoms. An especially preferred R⁴ is t-butyl. Preferably the subscript a is 2 or 3. When R⁵ is an alkyl group it preferably is a methyl group. When R⁵ is -OR⁶, R⁶ contains from 1 to 8 carbon atoms and most preferably from 1 to 4 carbon atoms. An especially preferred R⁶ is methyl. When R⁵ is an alkyl group, an especially preferred (C3) is butylated hydroxytoluene (BHT) of the formula 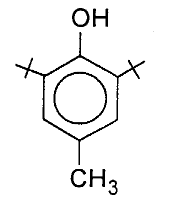 When R⁵ is -OR⁶, an especially preferred (C3) is butylated hydroxy anisole (BHA) of the formula

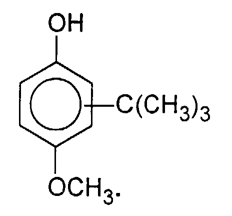

### (C4) The Phosphorus Compound

The phosphorus compound is of the formula 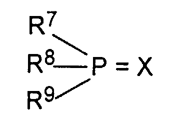 wherein R⁷, R⁸ and R⁹ are independently hydrogen, an aliphatic or alkoxy group containing from 1 to 12 carbon atoms, or an aryl, aliphatic substituted aryl, aryloxy or aliphatic substituted aryloxy group wherein the aryl group is phenyl or naphthyl, the aryloxy group is phenoxy or naphthoxy, the aliphatic group contains from 1 to 8 carbon atoms and X is oxygen or sulfur. In one embodiment R⁷, R⁸ and R⁹ are aliphatic substituted aryloxy groups wherein the aryloxy group is phenoxy and the aliphatic group contains from 1 to 4 carbon atoms. Most preferably the aliphatic group is methyl and X is oxygen. The preferred phosphorus compound for this embodiment is tricresyl phosphate

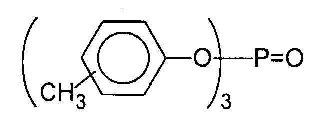

In another embodiment R⁷, R⁸ and R⁹ are aryloxy groups wherein the aryloxy group is phenoxy and X is sulfur. A most preferred phosphorus compound for this embodiment is triphenyl phosphothionate, also known as TPPT. This most preferred phosphorus compound is available from Ciba-Geigy under the name Irgalube® TPPT. The structure of TPPT is

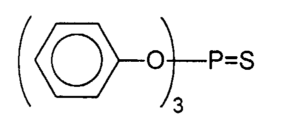

The ester characterized by Formula I preferably contains branched alkyl groups and generally is free of acetylenic and aromatic unsaturation. Some compounds of Formula I which contain such unsaturation may not be miscible in the fluorine-containing hydrocarbons. The esters of this invention also are preferably free of olefinic unsaturation except that some olefinic unsaturation may be present so long as the ester is miscible in the fluorine containing hydrocarbon.

The miscible organic lubricant comprising Components (B) and (C) are miscible with the fluorine-containing hydrocarbons (A) and, in particular, in the fluorohydrocarbons such as 1,1,1,2-tetrafluoroethane. The lubricants are compatible with the HFCs over a wide temperature range and, in particular, at low temperatures. The low temperature miscibility of the lubricants in fluorohydrocarbons such as 1,1,1,2-tetrafluoroethane at low temperatures is determined in the following manner.

The lubricant, 1 part by weight which comprises 99% (B) and 1% (C) and fluorine-containing hydrocarbon (A) (4 parts by weight), are introduced into a glass pressure vessel at room temperature. If the mixture is homogeneous at 25°C, the sealed glass vessel is immersed in a low temperature bath which can attain temperatures at -75°C or less. Starting at a temperature of 25°C, the temperature of the lubricant-refrigerant mixture is lowered in 5°C increments. The lower Critical Separation Temperature (L-CST) is defined as the highest temperature at which phase separation of the lubricant and refrigerant is observed. Phase separation is typically observed as a hazing or clouding of the lubricant-refrigerant mixture. The results of this miscibility test for esters of examples B1-B12 with (C1) as Triton X-45 and with (A) as R-134a are shown in Table I as Examples 1-12. In a parallel run wherein the lubricant comprised only the ester (B), the identical (L-CST) values are obtained.

**Table I**

| R-134a Lower Critical Separation Temperature, (L-CST) | | | |
|---|---|---|---|
| Example No. | Lubricant | | L-CST, °C |
| | 99% Product of Example | 1% (C1) as | |
| 1 | B1 | Triton X-45 | -75 |
| 2 | B2 | Triton X-45 | -60 |
| 3 | B3 | Triton X-45 | -35 |
| 4 | B4 | Triton X-45 | -5 |
| 5 | B5 | Triton X-45 | <-75 |
| 6 | B6 | Triton X-45 | -20 |
| 7 | B7 | Triton X-45 | -75 |
| 8 | B8 | Triton X-45 | -35 |
| 9 | B9 | Triton X-45 | -40 |
| 10 | B10 | Triton X-45 | -30 |
| 11 | B11 | Triton X-45 | <-75 |
| 12 | B12 | Triton X-45 | -15 |

The compositions of this invention are evaluated in the Constant Load Falex Wear Test, which is a modified ASTM D2670. The modifications are a decrease in load to 400 pounds versus the standard load of 700 pounds and also an increase in test time. The standard test time is 15 minutes and for this modification, the test time is 2 hours. This test also requires the use of a sealed vessel into which the fluorine-containing hydrocarbon, Component (A), can be introduced. A final modification involves a 2 minute break-in period at 150 pounds versus the standard 5 minute break-in period at 250 pounds. All other test parameters are equal.

Six lubricant blends are evaluated. Three are baseline blends and the other three are the inventive blends. The three baseline blends are Blends 1, 3 and 5 and comprise the ester (B) but no performance additive (C). The inventive Blends 2, 4 and 6 comprise the ester (B) with one or more performance additives (C). Blend 1 is the baseline for inventive Blend 2, Blend 3 is the baseline for inventive Blend 4 and Blend 5 is the baseline for inventive Blend 6. In Blends 2, 4 and 6 Component (C4), as tricresyl phosphate, is present at 2.6% of (B), Component (C1), as Triton X-45, is present at 1.0% of (B) and Component (C3) as butylated hydroxytoluene is present at 0.1% of (B). The baseline Blends 1, 3 and 5 containing Component (B) or the lubricant Blends 2, 4 and 6 containing Components (B) and (C) are charged to the Falex Test apparatus. Component (A) is then charged to the apparatus to 10 pounds per square inch. Component (A) is R-134a, 1,1,1,2-tetrafluoroethane. The results are presented in Table II. It can be observed from the results in Table II that there is an improvement in pin weight loss when Component (C) is present.

For Blends 1 and 2, Component (B) is 74% by weight of Example B7 and 26 % by weight of Example B10. This gives a viscosity of 22 cSt at 40°C. (ISO 22). For Blends 3 and 4, Component (B) is 45% by weight of Example B7 and 55 % by weight of Example B10. This gives a viscosity of 32 cSt at 40°C. (ISO 32). For Blends 5 and 6, Component (B) is 100% by weight of Example B7. This gives a viscosity of 68 cSt at 40°C. (ISO 68).

**Table II**

| Constant Load Falex Wear Test, Aluminum on Steel | |
|---|---|
| Blend Number | Pin Weight Loss, mg |
| 1 | 18.3 |
| 2 | 3.3 |
| 3 | 19.0 |
| 4 | 2.5 |
| 5 | 17.0 |
| 6 | 1.0 |

The compositions of this invention are also evaluated in the Step-Load to Failure Falex Wear Test, which is a modified ASTM D3233, Method B. The modifications are a break-in of 5 minutes at 150 pounds versus a break-in of 5 minutes at 300 pounds and an increase in the step load of 100 pound increments versus an increase in step load of 250 pound increments. The final modification is the introduction of the fluorine-containing hydrocarbon (A). This is accomplished by adding Component (A) to the lubricant composition (B) and (C) through a subsurface sparging tube. All other test parameters are equal.

Three lubricant blends are evaluated. The baseline blend is Blend 1 and Component (B) is present without any Component (C). The inventive Blends 2 and 3 comprise the ester (B) with one or more performance additives (C). In Blend 2 Component (C4), as tricresyl phosphate, is present at 2.6% of (B). In Blend 3 Component (C1), as Triton X-45, is present at 0.5% of (B). The baseline Blend 1 containing Component (B) or the lubricant Blends 2 and 3 containing Components (B) and (C) are charged to the Falex Test apparatus. The fluorine-containing hydrocarbon, Component (A), is then charged to the apparatus such that the lubricant composition (B) and (C) is saturated with the fluorine-containing hydrocarbon (A) throughout the test. The fluorine-containing hydrocarbon used as (A) is R-134a, 1,1,1,2-tetrafluoroethane. The results are presented in Table III. It can be observed from the results in Table III that there is an improvement in the failure load when Component (C) is present.

For the three blends, Component (B) is 14% by weight of Example B11 and 86 % by weight of Example B12. This gives a viscosity of 32 cSt at 40°C. (ISO32).

**Table III**

| Step Load Falex Wear Test, Steel on Steel | |
|---|---|
| Blend Number | Failure Load, Pounds |
| 1 | 700 |
| 2 | 1100 |
| 3 | 1100 |
| | |

Another test that is utilized in evaluating refrigerant lubricants is the Capillary Tube Blockage Test. This is a high temperature life test that is carried out in a small hermetic appliance compressor system. This test is used to measure both capillary tube blockages and wear performance at high lubricant temperatures. High temperatures are necessary for differentiating both wear and capillary tube blockage.
Test parameters are as follows:

| | |
|---|---|
| Test Length | 2000 Hours |
| Discharge Pressure | 1.6 MPa |
| Suction Pressure | 0.13 MPa |
| Winding Temperature | 140°C. |
| Cap Tube Temperature | -10°C. |

A break-in procedure is employed in carrying out this test. After running the test for 168 hours, the refrigerant composition is removed, the compressor is recharged with the identical composition and the external parts, including the capillary tube, are replaced. The formulation is then tested for 2000 hours. This modification is an attempt to minimize variations in capillary tube blockage that may be related to differences in initial compressor cleanliness.

Blend 1 is a baseline blend and comprises Component (B). Blend 2 is the inventive blend containing (B) and one or more performance additives (C). In Blend 2, (C1), as Triton X-45, is present at 1.0% of (B) and (C3), as butylated hydroxytoluene, is present at 0.09% of (B). The baseline Blend 1 or the inventive Blend 2 is charged to a small appliance compressor which employs an aluminum connecting rod. The fluorine-containing hydrocarbon, Component (A), is then charged to the compressor to 35 pounds per square inch. Component (A) is R-134a, which is 1,1,1,2-tetrafluoroethane. The results are presented in Table IV. It is observed from the results in this table that there is a substantial improvement in performance as demonstrated by the wear measurements on the small end of the connecting rod as well as an improvement in the % capillary tube blockage when a performance additive (C) is employed.

The Component (B) that is utilized is 80% by weight of Example B11 and 20 % by weight of Example B12. This gives a viscosity of 10 cSt at 40°C. (ISO 10).

**Table IV**

| 2000 Hour Capillary Tube Test | | |
|---|---|---|
| Blend Number | Wear Step, Microns | Percent Capillary Tube Blockage |
| 1 | 18 | 13 |
| 2 | 3 | 9 |
| 2 (Repeat) | 3 | 7 |

Another test used to prove the effectiveness of the instant invention is the Liquid Floodback Wear Test. This wear test is used for product evaluation in a rotary compressor configuration. Test parameters are as follows:

| | |
|---|---|
| Test Length | 100 and 500 Hours |
| Discharge Pressure | 3.5 MPa |
| Suction Pressure | 0.8 Mpa |
| Shell Temperature | 100°C. |

Blend 1 is the baseline blend comprising Component (B). The inventive Blends 2 and 3 comprise the ester (B) with one or more performance additives (C). In Blend 2 Component (C4), as tricresyl phosphate, is present at 2.6% of (B). In Blend 3 Component (C4) as tricresyl phosphate, is present at 2.6% of (B), Component (C1) as X-45 is present at 1.0% of (B) and Component (C3) as butylated hydroxytoluene is present at 1.0% of (B). The baseline Blend 1 containing Component (B) or the lubricant Blends 2 and 3 containing Components (B) and (C) are charged to the compressor. Charged to the apparatus are 380 parts of Component (B) or 380 parts of Components (B) and (C) followed by 670 parts of the fluorine-containing hydrocarbon, Component (A). Component (A) is R-407c, which is a blend of R-32, R-125 and R-134a (difluoromethane, pentafluoroethane and 1,1,1,2-tetrafluoroethane respectively). The results are presented in Table V. It can be observed from the results in Table V that the formulations containing Component (C) pass this test at both 100 and 500 hours.

For the three blends, Component (B) is 100% by weight of Example B10. This gives a viscosity of 68 cSt at 40°C. (ISO 68).

**Table V**

| Liquid Floodback Wear Test | | |
|---|---|---|
| Blend Number | Test Time, Hours | |
| | 100 | 500 |
| 1 | Fail | ---- |
| 2 | Pass | Pass |
| 3 | Pass | Pass |

The compositions of the present invention comprising Components (A), (B) and (C1) or (C2); or (A), (B),(C1) or (C2), and (C3) or (C4); or (A), (B), (C1) or (C2), (C3) and (C4) are useful as liquid refrigeration compositions.

Component (B) is present at from 5 to 90 percent of the total composition of components (A), (B) and (C).

Whichever Component (C) is present, it is present at a weight percent of Component (B). If 190 parts (B) is employed and (C4) is used at 2.6 percent of (B), then 4.94 parts is the amount of (C4) that is used (.026 X 190). The fluorine containing hydrocarbon (A) is present either as a major amount or a minor amount in the miscible organic lubricant which is an effective amount of a combination of Component (B) and Component (C).

When the miscible organic lubricant comprises Component (B) with Component (C1) or (C2), then (C1) or (C2) is generally present at from 0.5-4.0 percent of (B), preferably from 0.5-3.0 percent of (B) and most preferably from 0.5-2.0 percent of (B).

When the miscible organic lubricant comprises Component (B) with Component (C1) or (C2) and (C3), then generally (C1) or (C2) is present at from 0.5-4.0 percent of (B) while (C3) is present at from 0.05-1.0 percent of (B); preferably (Cl) or (C2) is present from 0.5-3.0 percent of (B) while (C3) is present at from 0.05-0.75 percent of (B); and most preferably (C1) or (C2) is present from 0.5-2 percent of (B) while (C3) is present from 0.1-0.5 percent of (B).

When the miscible organic lubricant comprises Component (B) with Components (C1) or (C2) and (C4), then generally (C1) or (C2) is present at from 0.5-4 percent of (B) while (C4) is present at from 1-5 percent of (B); preferably (C1) or (C2) is present from 0.5-3.0 percent of (B) while (C4) is present at from 1-4 percent of (B); and most preferably (C1) or (C2) is present from 0.5-2 percent of (B) while (C4) is present from 1-3 percent of (B).

When the miscible organic lubricant comprises Component (B) with Components (C1) or (C2), (C3) and (C4), then generally (C1) or (C2) is present at from 0.5-4 percent of (B), (C3) is present from 0.05-1.0 percent of (B) and (C4) is present from 1-5 percent of (B); preferably (C1) or (C2) is present from 0.5-3.0 percent of (B), (C3) is present from 0.05-0.75 percent of (B) and (C4) is present from 1-3 percent of (B); and most preferably (C1) or (C2) is present from 0.5-2.0 percent of (B), (C3) is present from 0.1-0.5 percent of (B) and (C4) is present from 1-3 percent of (B).

While the invention has been explained in relation to its preferred embodiments, it is to be understood that various modifications thereof will become apparent to those skilled in the art upon reading the specification. Therefore, it is to be understood that the invention disclosed herein is intended to cover such modifications.

## Claims

1. A liquid refrigeration composition comprising:
(A) from about 10 to about 90 percent by weight of at least one fluorine-containing hydrocarbon containing 1 or 2 carbon atoms, further wherein fluorine is the only halogen in said fluorine-containing hydrocarbon; and an effective amount of at least one miscible organic lubricant comprising
(B) from about 5 to about 90 percent by weight of at least one ester of a carboxylic acid and a polyhydroxy compound characterized by the general formula
R[OC(O)R']ₙ (I)
wherein R is a hydrocarbyl group; each R¹ is independently (a) hydrogen, (b) a straight chain hydrocarbyl group having from 1 to about 7 carbon atoms, (c) branched chain hydrocarbyl group having from 4 to about 20 carbon atoms, or (d) a straight chain hydrocarbyl group having from 8 to about 14 carbon atoms, provided that when at least one R¹ is (d), at least one other R¹ is either (a) or (b); n is an integer of from 2 to 10; and
(C) from about 0.1 to about 5 percent by weight of a performance additive comprising
(1) an alkoxylated alcohol or phenol of the formula 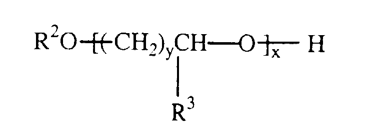 or
(2) an alkoxylated glycol of the formula 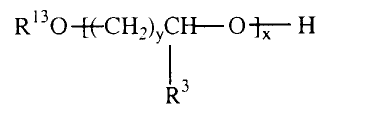 wherein R² is an aliphatic group containing from 1 to 20 carbon atoms or an aromatic or aliphatic substituted aromatic group containing from 6 to 24 carbon atoms, R³ is hydrogen, methyl or ethyl, R¹³ is a hydroxy alkyl group wherein the alkyl group contains from 2 to 8 carbon atoms, y is an integer of from 1 to 3 and x is an integer of from 2 to 50.

2. The composition of claim 1 wherein (A) is a mixture of 2 or more fluorine containing hydrocarbons.

3. The composition of claim 1 wherein (A) is 1,1,1,2-tetrafluoroethane.

4. The composition of any preceding claim wherein said polyhydroxy compound comprises ethylene glycol diethylene glycol triethylene glycol propylene glycol dipropylene glycol glycerol neopentyl glycol 1,2-butanediol, 1,3-butanediol. 1,4-butanediol, pentaerythritol, dipentaerythritol tripentaerhthritol, triglycerol, trimethylolpropane, sorbitol; hexaglycerol 2,2,4-trimethyl-1,3-pentanediol, or mixtures thereof.

5. The composition of any preceding claim wherein at least one R¹ is a straight chain hydrocarbyl group having from 1 to about 7 carbon atoms or a branched chain hydrocarbyl group having from 4 to about 20 carbon atoms.

6. The composition of any preceding claim wherein when R¹ is a straight chain hydrocarbyl group, the carboxylic acid comprises acetic acid, propionic acid, butyric acid, pentanoic acid, hexanoic acid or heptanoic acid.

7. The composition of any one of claims 1 to 5 wherein when R¹ is a branched chain hydrocarbyl group, the carboxylic acid comprises 2-ethyl-n-butyric acid, 2-ethylhexanoic acid, neoheptanoic acid, neodecanoic acid or mixtures thereof.

8. The composition of any one of claims 1 to 5 wherein the branched chain hydrocarbyl group is characterized by the structure
-C(R¹⁰)(R¹¹)(R¹²)
wherein R¹⁰, R¹¹ and R¹² are each independently alkyl groups and at least one of the alkyl groups contains 2 or more carbon atoms.

9. The composition of any one of claims 1 to 4 wherein R¹ is a mixture of a straight chain hydrocarbyl group having from 1 to 7 carbon atoms with a straight chain hydrocarbyl group having from 8 to about 14 carbon atoms.

10. The composition of any one of claims 1 to 4 wherein R¹ is a mixture of a branched chain hydrocarbyl group having from 4 to about 20 carbon atoms with a straight chain hydrocarbyl group having from 8 to about 14 carbon atoms.

11. The composition of any one of claims 1 to 4 wherein said polyhydroxy compound comprises neopentyl glycol trimethylolpropane, pentaerythritol or dipentaerythritol and said carboxylic acid is 2-ethylhexanoic acid.

12. The composition of any one of claims 1 to 4 wherein said carboxylic acid is a monocarboxylic acid, a dicarboxylic acid or mixtures thereof wherein the monocarboxylic acid is greater than 50% by weight of the carboxylic acid.

13. The composition of any one of claims 1 to 4 wherein said carboxylic acid comprises formic acid, propionic acid, butyric acid, pentanoic acid, hexanoic acid, heptanoic acid, 2-ethyl-n-butyric acid, 2-hexyldecanoic acid, isostearic acid, 2-methylhexanoic acid, 3,5,5-trimethylhexanoic acid, 2-ethylhexanoic acid, neoheptanoic acid, neodecanoic acid, maleic acid, succinic acid, adipic acid, decanoic acid, dodecanoic acid, stearic acid, lauric acid, behenic acid or mixtures thereof.

14. The composition of any one of claims 1 to 3 wherein (B) is derived from a polyhydroxy compound containing oxyalkylene groups.

15. The composition of any preceding claim wherein R² is an aliphatic group and contains from 6 to 12 carbon atoms or an aromatic or substituted aromatic group and contains from 6 to 18 carbon atoms.

16. The composition of any preceding claim wherein y is 1 and R³ is hydrogen.

17. The composition of any preceding claim wherein the performance additive (C) further comprises
(3) a phenol of the formula 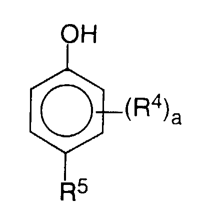 wherein R⁴ is an alkyl group containing from 1 to 24 carbon atoms, R⁵ is hydrogen, an alkyl group containing 1 or 2 carbon atoms or -OR wherein R⁶ is an alkyl group containing from 1 to 12 carbon atoms and a is an integer of from 1 to 4; or optionally
(4) 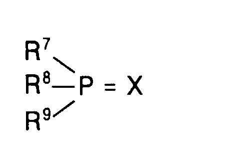 wherein R⁷, R⁸ and R⁹ are independently hydrogen, an aliphatic or alkoxy group containing from 1 to 12 carbon atoms, or an aryl aliphatic substituted aryl, aryloxy or aliphatic substituted aryloxy group wherein the aryl group is phenyl or naphthyl, the aryloxy group is phenoxy or naphthoxy, the aliphatic group contains from 1 to 8 carbon atoms and X is oxygen or sulfur; or mixtures of (3) and (4).

18. The composition of claim 17 wherein within (C3), a is 2, R⁴ is t-butyl and R⁵ is methyl and within (C4), R⁷, R⁸ and R⁹ are aliphatic substituted aryloxy groups wherein the aryl group is phenyl and the aliphatic group contains from 1 to 4 carbon atoms and X is oxygen.

19. The composition of claim 17 wherein within (C4), R⁷, R⁸ and R⁹ are aryloxy groups wherein the aryl group is phenyl and X is sulfur.
